# FASCICULE DE BREVET EUROPEEN

(11) **EP 1 458 268 B1**
(45) Date de publication et mention de la délivrance du brevet: **01.09.2010**
(21) Numéro de dépôt: 02799113.2
(22) Date de dépôt: 23.12.2002
(51) Int. Cl.: A47J 27/08

(54) **APPAREIL DE CUISSON D'ALIMENTS SOUS PRESSION COMPORTANT UN CAPTEUR DE TEMPERATURE**
DAMPFDRUCK-KOCHGERÄT MIT TEMPERATURSENSOR
APPLIANCE FOR COOKING FOODS UNDER PRESSURE COMPRISING A TEMPERATURE SENSOR

(30) Priorité: 27.12.2001 FR 0117101
(43) Date de publication de la demande: 22.09.2004
(73) Titulaire: SEB S.A., 69132 Ecully Cedex (FR)
(72) Inventeur: BARAILLE, Eric, Laurent, F-21000 Dijon (FR); CARTIGNY, Michel, Pierre, F-21310 Mirebeau (FR); GAILHARD, Thierry, René, F-69970 Chaponnay (FR)
(74) Mandataire: Martin, Didier Roland Valéry
(86) Numéro de dépôt international: PCT/FR2002/004534
(87) Numéro de publication internationale: WO 2003/055365

(56) Documents cités:
- EP-A- 0 434 047
- FR-A- 2 634 914
- FR-A- 2 664 148
- GB-A- 2 061 760
- US-A- 6 083 543

## Description

### DOMAINE TECHNIQUE

La présente invention se rapporte au domaine technique général des appareils de cuisson domestiques sous pression comprenant une cuve et un couvercle destiné à être verrouillé sur la cuve pour former une enceinte de cuisson étanche, lesdits appareils étant destinés à assurer la cuisson sous pression de vapeur des aliments contenus dans la cuve.

La présente invention concerne un appareil de cuisson d'aliments sous pression, du genre autocuiseur, comportant une cuve et un couvercle destiné à être rapporté sur la cuve pour former une enceinte de cuisson étanche, un capteur de température et une soupape de régulation de pression sensible à la pression régnant dans l'enceinte de cuisson, ladite soupape étant mobile entre deux positions stables de butée, la première dans laquelle elle ferme la communication de l'enceinte vers l'extérieur tant que la pression interne est inférieure à une pression prédéterminée P₀, la deuxième dans laquelle elle met en communication l'intérieur de l'enceinte avec l'extérieur par une sortie de vapeur dès que la pression interne atteint sensiblement la pression prédéterminée P₀.

La présente invention concerne également un procédé de contrôle du cycle de cuisson d'un appareil de cuisson.

### TECHNIQUE ANTERIEURE

On a déjà cherché à obtenir ou récupérer des informations relatives à des grandeurs ou paramètres représentatifs de l'état de fonctionnement d'un appareil de cuisson sous pression, en vue de piloter son fonctionnement ou pour des raisons de contrôle de la sécurité de fonctionnement.

Ainsi, il est déjà connu de mesurer la température de cuisson d'un autocuiseur ou sa pression de fonctionnement, à l'aide de capteurs disposés à l'intérieur même du récipient, les informations obtenues servant à contrôler les différents paramètres de la cuisson de l'appareil, tel que la durée de cuisson, le niveau de pression de cuisson ou encore le niveau d'énergie thermique fourni pour assurer la cuisson des aliments. Un tel dispositif et une telle méthode sont par exemple décrits dans le document GB-2 067 325.

Il est déjà également connu de disposer un capteur de température sur le couvercle d'un autocuiseur de manière à obtenir un signal électrique, image de la température de cuisson, de manière à pouvoir contrôler, par l'intermédiaire d'un dispositif électronique de traitement, le fonctionnement de l'autocuiseur. Les informations obtenues sont destinées à fournir à l'utilisateur une série d'informations visuelles ou sonores au sujet du déroulement du cycle de cuisson. Un tel dispositif est décrit dans la demande de brevet FR-2 634 914.

Un autre appareil de cuisson est connu du document GB2061760A.

Les dispositifs connus s'avèrent délicats à mettre en oeuvre, dans la mesure où ils nécessitent une prise d'information à l'intérieur d'une enceinte étanche, cette information devant être ensuite retransmise à un organe disposé à l'extérieur de l'autocuiseur.

Par ailleurs, les dispositifs connus mettent également en oeuvre une série de dispositifs de traitement électronique, qui s'avèrent complexes et d'un coût souvent élevé.

Il est enfin connu d'avoir recours à un minuteur en association avec un autocuiseur de manière à contrôler le temps de cuisson. Dans la plupart des cas, le minuteur est un organe séparé de l'appareil que l'utilisateur met lui-même en route par action positive, s'agissant d'un mode de déclenchement manuel.

Pour tenter de rendre automatique un tel déclenchement, il a déjà été proposé de mettre en route un tel minuteur par la détection de la pression interne de l'appareil de cuisson au moyen d'un capteur de pression.

Un tel dispositif s'avère, pour les raisons déjà évoquées précédemment, délicat à mettre en oeuvre, dans la mesure où il nécessite une prise d'information au sein même d'une enceinte de cuisson supposée étanche.

Enfin, il a déjà été envisagé d'assurer le déclenchement automatique de tels minuteurs par la détection du déplacement d'un indicateur de pression grâce à une sonde à effet Hall. Un tel dispositif est également difficile à mettre en oeuvre, d'un coût élevé et d'une précision relative.

### EXPOSE DE L'INVENTION

Les objets assignés à l'invention visent en conséquence à porter remède aux différents inconvénients énumérés précédemment et à proposer un nouvel appareil de cuisson d'aliments pourvu des moyens nécessaires pour que l'on puisse détecter, de manière simple et fiable, le début du cycle de cuisson des aliments contenus dans l'autocuiseur.

Un autre objet de l'invention vise à proposer un nouvel appareil de cuisson permettant de fournir à l'utilisateur une information fiable sur le début du cycle de cuisson.

Un autre objet de l'invention vise à proposer un nouvel appareil de cuisson dont le positionnement du capteur de température est particulièrement facile à mettre en oeuvre.

Un autre objet de l'invention vise à proposer un nouvel appareil de cuisson sous pression dont les fonctionnalités sont améliorées et qui permet à l'utilisateur de surveiller le cycle de cuisson de manière efficace.

Un autre objet de l'invention vise à proposer un nouvel appareil de cuisson sous pression dont la conception générale et simplifiée.

Les objets assignés à l'invention visent également à fournir un nouveau minuteur pour appareil de cuisson particulièrement simple et pratique d'utilisation.

Les objets assignés à l'invention visent également à proposer un nouveau procédé de contrôle du cycle de cuisson d'un appareil de cuisson qui soit particulièrement efficace, tout en procurant une très grande liberté à l'utilisateur.

Les objets assignés à l'invention sont atteints à l'aide d'un appareil de cuisson d'aliments sous pression comportant :
- une cuve et un couvercle destiné à être rapporté sur la cuve pour former une enceinte de cuisson étanche,
- un capteur de température,
- une soupape de régulation de pression sensible à la pression régnant dans l'enceinte de cuisson et montée mobile, entre deux positions stables de butée, la première dans laquelle elle ferme la communication de l'enceinte avec l'extérieur tant que la pression interne est inférieure à une pression prédéterminée P₀, la deuxième dans laquelle elle met en communication l'intérieur de l'enceinte avec l'extérieur par une sortie de vapeur, dès que la pression interne atteint sensiblement la pression prédéterminée P₀,
caractérisé en ce que le capteur de température est disposé au voisinage de la sortie pour permettre de capter l'augmentation de température résultant du passage de la vapeur à travers la sortie de vapeur, et est relié fonctionnellement à un minuteur ou un dispositif de sécurité, de manière à assurer son déclenchement dès la captation de l'augmentation de température.

Les objets assignés à l'invention sont atteints à l'aide d'un minuteur conforme à l'objet de la revendication 10.

Les objets assignés à l'invention sont atteints à l'aide d'un procédé de contrôle du cycle de cuisson d'un appareil de cuisson sous pression conforme à l'objet de la revendication 11.

### DESCRIPTIF SOMMAIRE DES DESSINS

D'autres objets et avantages de l'invention apparaîtront plus en détails à la lecture de la description qui suit, en référence aux dessins annexés donnés à titre d'exemples illustratifs et non limitatifs dans lesquels :
- La figure 1 illustre, selon une vue en perspective générale partielle, un autocuiseur conforme à l'invention.
- La figure 2 illustre, selon une vue partielle en perspective, un détail de réalisation d'un autocuiseur conforme à l'invention comportant un minuteur amovible.
- La figure 3 illustre, selon une vue identique à celle de la figure 2, un détail de réalisation d'un autocuiseur conforme à l'invention, le minuteur ayant été enlevé.
- La figure 4 illustre, selon une vue en coupe transversale partielle, les détails de montage d'un capteur de température sur le couvercle d'un autocuiseur conforme à l'invention.

### MEILLEURE MANIERE DE REALISER L'INVENTION

Dans la description qui suit, il sera fait référence à un appareil de cuisson domestique sous pression, du genre autocuiseur comprenant de manière connue en soi une cuve de cuisson (non représentée aux figures) métallique et un couvercle 2 destiné à être rapporté sur la cuve pour former une enceinte de cuisson étanche. L'étanchéité est obtenue par verrouillage du couvercle 2 sur la cuve à l'aide d'un joint d'étanchéité annulaire (non représenté aux figures) et d'un système de verrouillage / déverrouillage, pour permettre la montée en pression de l'appareil et la cuisson des aliments contenus dans l'appareil.

Les systèmes de verrouillage / déverrouillage du couvercle 2 sur la cuve pourront être de tout type connu, sans pour autant limiter l'objet de l'invention, et faire intervenir un système à étrier, un système à rampes de cuve et de couvercle ou encore un système comprenant des mâchoires déplaçables radialement ou tout autre système équivalent.

Les appareils de cuisson domestiques sous pression concernés par l'invention sont donc des autocuiseurs à étrier, des autocuiseurs à baïonnettes, des autocuiseurs à mâchoires à déplacement radial ou non ou encore des autocuiseurs dits à trou d'homme, une telle liste n'étant bien évidemment pas limitative.

L'appareil de cuisson d'aliments sous pression conforme à l'invention comprend également une soupape 3 de régulation de pression équipée d'un joint d'étanchéité 3A, montée de préférence sur le couvercle 2, une telle soupape 3 étant sensible à la pression régnant dans l'enceinte de cuisson et étant montée mobile entre deux positions stables de butée, la première dans laquelle elle ferme la communication de l'enceinte vers l'extérieur de l'appareil tant que la pression interne est inférieure à une pression prédéterminée P₀, la deuxième dans laquelle elle met en communication l'intérieur de l'enceinte avec l'extérieur de l'appareil par une sortie de vapeur dès que la pression interne atteint sensiblement la pression prédéterminée P₀.

Selon une variante préférentielle de l'invention, la pression P₀ sera choisie comme étant la pression de cuisson normale de l'autocuiseur.

De tels dispositifs sont bien connus de l'homme du métier et visent à obtenir une régulation de la pression de cuisson qui doit être maintenue en deçà d'un seuil prédéterminé P₀, valeur à partir de laquelle la soupape 3 assure une fuite de vapeur régulant la pression interne de l'autocuiseur.

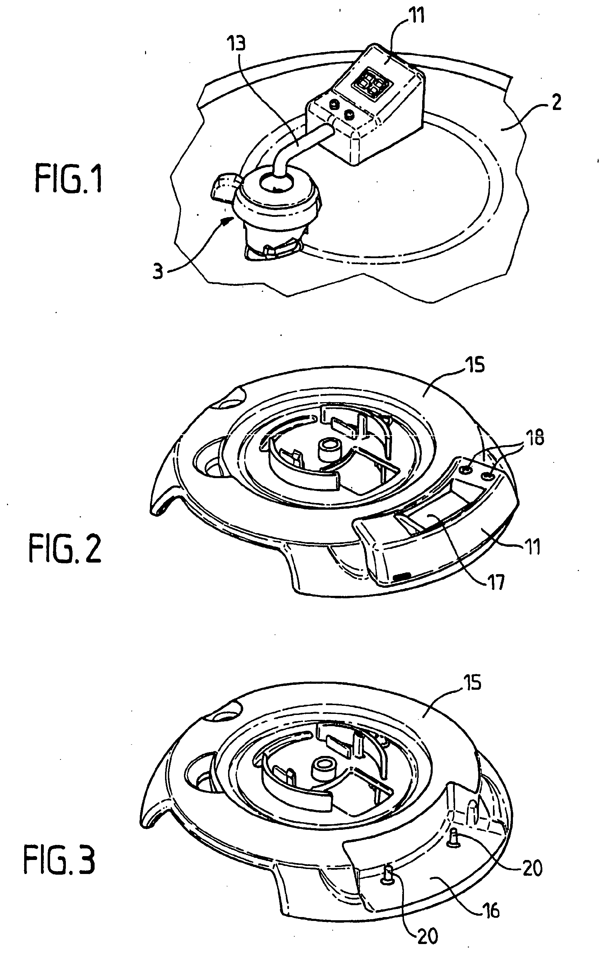

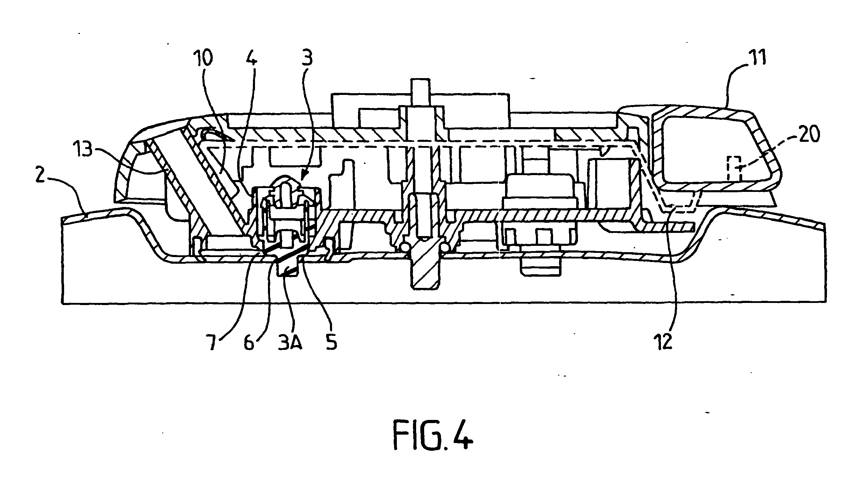

Tel qu'illustré aux figures 1 et 4 par exemple, la soupape 3 pourra être avantageusement une soupape à poids ou à ressort de compression montée mobile dans un puits 4 entre une position stable de butée illustrée à la figure 4, dans laquelle elle repose sous son propre, poids sur un siège 5 ménagé à travers un perçage 6 du couvercle 2.

La soupape 3 peut également occuper une position haute de butée (non représentée aux figures) sous l'effet de la pression interne de fonctionnement de l'autocuiseur, lorsque cette dernière atteint ou dépasse la valeur prédéterminée P₀ de fonctionnement. Dans cette position, la soupape 3 s'élève et dégage l'orifice 5 à travers lequel la vapeur peut s'échapper vers l'extérieur, à travers le perçage 6 par une sortie de vapeur 7, située immédiatement ou au voisinage proche dudit perçage.

Tel que cela est bien connu de l'homme du métier, la soupape 3 peut être pourvue d'un système de tarage permettant à l'utilisateur de sélectionner une pression de cuisson prédéterminée P₀ parmi un choix de deux, voire plusieurs niveaux de pression en fonction du type d'aliments présents dans l'autocuiseur.

Selon l'invention, l'appareil de cuisson d'aliments sous pression est pourvu d'un capteur de température 10 qui est disposé au voisinage de la sortie 7, pour permettre de capter l'augmentation de température résultant du passage de la vapeur à travers la sortie 7 de vapeur.

Grâce à cette disposition, il est possible d'obtenir de manière particulièrement simple et fiable une information en temps réel de l'atteinte de la pression de fonctionnement, en l'occurrence par exemple de cuisson de l'appareil, le dégagement de vapeur étant brutal et s'accompagnant d'une élévation également brutale et rapide de la vapeur suite au déclenchement de la soupape 3.

Le capteur de température 10 peut être disposé à proximité immédiate de la sortie 7 ou à une certaine distance, de l'ordre de quelques centimètres par exemple, dès l'instant que la variation de température peut être détectée de manière suffisamment nette et sensible. La distance de positionnement pourra par ailleurs être utilement déterminée par l'homme de l'art en fonction de la sensibilité propre du capteur 10 utilisé.

Tel qu'illustré aux figures, le capteur 10 de température sera avantageusement relié fonctionnellement à un minuteur 11, de manière à assurer son déclenchement dès la captation de l'augmentation de température.

Grâce à cette disposition, le décompte du temps de cuisson est alors déclenché de manière automatique, sans aucune intervention de l'utilisateur.

Le capteur 10 utilisé pourra être avantageusement un capteur de type CTN relié fonctionnellement par une connectique 12 appropriée et via une électronique de traitement au minuteur 11.

Avantageusement, et tel qu'illustré aux figures, le minuteur 11 ainsi que le capteur 10 de température seront montés sur le couvercle 2 de l'autocuiseur.

A titre de variante, il est bien évidemment envisageable de positionner ces deux éléments directement sur ou à travers les parois de la cuve, par l'intermédiaire d'un emplacement approprié ou de les fixer également sur la cuve par l'intermédiaire des poignées de l'autocuiseur.

Avantageusement, tel qu'illustré aux figures 1 et 4, la sortie de vapeur est formée par un conduit 13 débutant en aval de la soupape 3 à proximité de la sortie 7 et débouchant à l'extérieur de l'appareil.

Selon cette configuration, le capteur 10 de température est monté à l'extérieur du conduit 13 et par exemple en appui contre la surface extérieure des parois du conduit 13. Le capteur 10 pourrait néanmoins être monté à l'intérieur du conduit 13 (figure 1).

De manière particulièrement avantageuse, le conduit 13 ainsi que le capteur de température 10 pourront être prémontés et faire partie d'un ensemble unitaire monobloc, intégré directement dans une platine 15 destinée à être mise en place sur le couvercle 2.

Selon une autre caractéristique de l'invention, le minuteur 11 sera avantageusement un minuteur amovible que l'utilisateur peut donc extraire de l'autocuiseur pour le conserver sur ou près de lui.

Cette particularité permet à l'utilisateur, dès le déclenchement automatique du minuteur 11 par l'intermédiaire du capteur 10 disposé dans le flux de chaleur de régulation de pression, signalé par exemple par un signal sonore, d'extraire le minuteur 11 et de surveiller l'évolution du temps de cuisson à distance de l'appareil. Ceci permet en même temps à l'utilisateur de régler le niveau de cuisson dès l'atteinte de la pression prédéterminée de cuisson, tout en récupérant le minuteur 11.

Avantageusement, l'autocuiseur sera pourvu d'un logement 16 de réception du minuteur 11. Le logement 16 peut également, à titre de variante, être ménagé dans une platine 15 indépendante.

Le minuteur 11 sera pourvu d'un écran LCD 17 de lecture d'information, des températures et du temps notamment, et de boutons 18 permettant d'effectuer différents réglages, tels que la durée de cuisson par exemple.

Le minuteur 11 sera également pourvu de connecteurs femelles (non représentés) destinés à venir en contact avec des connecteurs mâles 20 reliés à la connectique 12 et disposés dans le logement 16 pour assurer la connexion électrique avec le capteur 10.

A titre de variante, le capteur de température 10 peut être relié à un organe autre qu'un minuteur, et par exemple à un dispositif de sécurité, signalant, par exemple de manière sonore, l'atteinte d'une pression prédéterminée critique ou d'une température prédéterminée critique.

En fonctionnement, l'utilisateur verrouille le couvercle 2 sur la cuve et initialise le minuteur 11 en le mettant dans sa position d'éveil, de manière à ce qu'il puisse détecter une élévation de température.

Dans le cas d'un minuteur classique, le seuil de déclenchement du capteur de température pourrait être par exemple préréglé en usine, à une valeur de l'ordre de 50°C, température à partir de laquelle le capteur 10 envoie un signal de décompte du temps au minuteur 11.

Le minuteur 11 étant en position d'éveil et l'autocuiseur verrouillé, la montée en température peut débuter. Dès que la pression de fonctionnement prédéterminée de cuisson est atteinte, la soupape 3 laisse échapper un flux de vapeur, ce qui provoque une brusque élévation de température dans le conduit 13, élévation de température qui est détectée par le capteur 10. Ce dernier envoie un signal de détection de température au minuteur 11 qui émet un signal, par exemple sonore, prévenant l'utilisateur.

Ce dernier peut alors retirer le minuteur 11, effectuer au choix différentes opérations, telles qu'arrêter la sonnerie, entrer le temps de cuisson requis si l'utilisateur ne l'a pas auparavant déjà entré dans le minuteur ou modifier le temps de cuisson préalablement déjà entré, etc., tout en prenant le minuteur 11 avec lui.

Ultérieurement, dès l'atteinte du temps de cuisson final préréglé par l'utilisateur, ce dernier est à nouveau averti par le minuteur par un signal sonore et/ou par un signal de clignotement de l'affichage digital 17.

Le paramétrage de la détection de température peut être avantageusement amélioré à l'aide d'un logigramme prévoyant, pour des raisons de sécurité, une détection d'un seuil inférieur de température de 45°C, le logigramme contenant les informations nécessaires pour ajouter systématiquement une valeur constante de 5° par exemple à la valeur de température relevée, de manière à être certain de détecter la température de 50°C, laquelle peut alors être validée ou non par l'utilisateur, ce qui déclenche le décomptage du temps.

De la même façon, une valeur limite supérieure de température, par exemple de l'ordre de 75°C, peut être préprogrammée, température seuil maximale à partir de laquelle le décomptage du temps est systématiquement validé et enclenché.

Le dispositif conforme à l'invention permet en conséquence de détecter, de manière particulièrement fiable et sûre, le début de la cuisson dans un autocuiseur, et ce indépendamment de la valeur de pression régnant dans l'enceinte de cuisson.

L'invention concerne donc en conséquence un procédé de contrôle du cycle de cuisson d'un appareil de cuisson sous pression, du genre autocuiseur, pourvu ou non directement d'éléments de chauffe, dans lequel on utilise la température du flux de vapeur s'échappant de la soupape de régulation de pression de l'appareil pour assurer le déclenchement d'un minuteur monté sur l'appareil. Cette utilisation de la température du flux de vapeur s'effectue en détectant, à l'aide d'un capteur de température approprié, la brusque élévation de, température qui est générée par le brusque échappement de vapeur dès que la pression de fonctionnement de l'appareil est atteinte.

Simultanément, ou sensiblement simultanément au déclenchement du minuteur, ce dernier émet un signal d'avertissement, par exemple lumineux ou sonore ou autre, en vue de prévenir l'utilisateur de son déclenchement.

Selon le procédé de contrôle du cycle de cuisson conforme à l'invention, le minuteur étant monté amovible sur l'appareil de cuisson, on dissocie ou sépare physiquement le minuteur de l'appareil, puis on surveille à distance de l'appareil l'évolution de la cuisson par consultation, notamment visuelle du minuteur.

En effet, le montage amovible du minuteur permet à l'utilisateur de prendre le minuteur avec lui dès ou après son déclenchement, et donc de s'éloigner de l'appareil de cuisson en fonctionnement. Ceci permet à l'utilisateur de surveiller et de contrôler l'évolution de la cuisson en étant à distance et dans une localisation spatiale entièrement séparée de l'appareil.

Selon le procédé, le minuteur émet ensuite un signal d'avertissement de fin de cycle de cuisson, ce qui permet à l'utilisateur, éventuellement éloigné de l'appareil, de revenir vers ce dernier pour arrêter la cuisson par exemple.

### POSSIBILITE D'APPLICATION INDUSTRIELLE

L'invention trouve son application industrielle dans la fabrication et la conception d'appareils de cuisson sous pression.

## Revendications

1. Appareil de cuisson d'aliments sous pression comportant :
- une cuve et un couvercle (2) destiné à être rapporté sur la cuve pour former une enceinte de cuisson étanche,
- un capteur de température (10),
- une soupape (3) de régulation de pression sensible à la pression régnant dans l'enceinte de cuisson et montée mobile entre deux positions stables de butée, la première dans laquelle elle ferme la communication de l'enceinte avec l'extérieur tant que la pression interne est inférieure à la pression prédéterminée P₀, la deuxième dans laquelle elle met en communication l'intérieur de l'enceinte avec l'extérieur par une sortie (7) de vapeur, dès que la pression interne atteint sensiblement la pression prédéterminée P₀,
**caractérisé en ce que** le capteur de température (10) est disposé au voisinage de la sortie (7) pour permettre de capter l'augmentation de température résultant du passage de la vapeur à travers la sortie (7) de vapeur, et est relié fonctionnellement à un minuteur (11) ou un dispositif de sécurité, de manière à assurer son déclenchement dès la captation de l'augmentation de température.

2. Appareil selon la revendication 1 **caractérisé en ce que** le minuteur (11) et le capteur de température (10) sont montés sur la cuve ou sur le couvercle (2).

3. Appareil selon la revendication 2 **caractérisé en ce que** le minuteur (11) est amovible.

4. Appareil selon l'une des revendications 1 à 3 **caractérisé en ce que** le minuteur (11) est relié fonctionnellement au capteur de température (10) par l'intermédiaire de connecteurs électriques (20).

5. Appareil selon l'une des revendications 1 à 4 **caractérisé en ce que** la sortie (7) de vapeur est formée par un conduit (13) débutant en aval de la soupape (3).

6. Appareil selon la revendication 5 **caractérisé en ce que** le conduit (13) et le capteur de température (10) font partie d'un ensemble unitaire monobloc.

7. Appareil selon la revendication 5 **caractérisé en ce que** le capteur de température (10) est monté à l'extérieur du conduit (13).

8. Appareil selon la revendication 7 **caractérisé en ce que** le capteur de température (10) est monté contre la surface extérieure du conduit (13).

9. Appareil selon l'une des revendications précédentes **caractérisé en ce qu'**il est constitué par un autocuiseur.

10. Minuteur amovible (11) destiné à être utilisé et monté amovible sur un appareil de cuisson d'aliments sous pression comportant :
1 une cuve et un couvercle (2) destiné à être rapporté sur la cuve pour former une enceinte de cuisson étanche,
2 un capteur de température (10),
3 une soupape (3) de régulation de pression sensible à la pression régnant dans l'enceinte de cuisson et montée mobile entre deux positions stables de butée, la première dans laquelle elle ferme la communication de l'enceinte avec l'extérieur tant que la pression interne est inférieure à la pression prédéterminée P₀, la deuxième dans laquelle elle met en communication l'intérieur de l'enceinte avec l'extérieur par une sortie (7) de vapeur, dès que la pression interne atteint sensiblement la pression prédéterminée P₀, ledit capteur de température (10) étant disposé au voisinage de la sortie (7) pour permettre de capter l'augmentation de température résultant du passage de la vapeur à travers la sortie (7) de vapeur, et étant relié fonctionnellement au minuteur amovible (11) de manière à assurer son déclenchement dès la captation de l'augmentation de température, ledit minuteur amovible (11) émettant un signal d'avertissement en vue de prévenir l'utilisateur de son déclenchement et de permettre à l'utilisateur d'extraire le minuteur (11).

11. Procédé de contrôle du cycle de cuisson d'un appareil de cuisson sous pression, dans lequel on utilise la température du flux de vapeur s'échappant de la soupape de régulation de pression de l'appareil pour assurer le déclenchement automatique d'un minuteur monté sur l'appareil émettant un signal d'avertissement pour informer l'utilisateur en temps réel de l'atteinte de la pression de fonctionnement.

12. Procédé selon la revendication 11 **caractérisé en ce que** simultanément au déclenchement du minuteur ou du dispositif de sécurité, ce dernier émet un signal d'avertissement, par exemple lumineux ou sonore, pour prévenir l'utilisateur.

13. procédé selon la revendication 10 ou 11 **caractérisé en ce que** le minuteur étant monté amovible sur l'appareil, on dissocie le minuteur de l'appareil, puis on surveille à distance de l'appareil l'évolution de la cuisson par consultation du minuteur.

14. Procédé selon la revendication 13 **caractérisé en ce que** le minuteur émet un signal d'avertissement de fin de cycle de cuisson.

## Claims

1. An appliance for cooking food under pressure, the appliance comprising:
a bowl and a lid (2) designed to be mounted on the bowl to form a leaktight cooking enclosure;
a temperature sensor (10); and
a pressure-regulating valve (3) that is sensitive to the pressure prevailing inside the cooking enclosure and that is mounted to move between two stable abutment positions, namely a first position in which it shuts off communication from the enclosure to the outside so long as the internal pressure is lower than a predetermined pressure P₀, and a second position in which it puts the inside of the enclosure into communication with the outside via a steam outlet (7) once the internal pressure reaches substantially the predetermined pressure P₀;
said appliance being **characterized in that** the temperature sensor (10) is disposed in the vicinity of the outlet (7) so as to make it possible to sense the increase in temperature resulting from the steam passing through the steam outlet (7), and is connected functionally to a timer (11) or to a safety device so as to trigger it once the increase in temperature is sensed.

2. An appliance according to claim 1, **characterized in that** the timer (11) and the temperature sensor (10) are mounted on the bowl or on the lid (2).

3. An appliance according to claim 2, **characterized in that** the timer (11) is removable.

4. An appliance according to any one of claims 1 to 3, **characterized in that** the timer (11) is connected functionally to the temperature sensor (10) via electrical connectors (20).

5. An appliance according to any one of claims 1 to 4, **characterized in that** the steam outlet (7) is formed by a duct (13) starting downstream from the valve (3).

6. An appliance according to claim 5, **characterized in that** the duct (13) and the temperature sensor (10) are part of a one-piece unit.

7. An appliance according to claim 5, **characterized in that** the temperature sensor (10) is mounted outside of the duct (13).

8. An appliance according to claim 7, **characterized in that** the temperature sensor (10) is mounted against the outside surface of the duct (13).

9. An appliance according to any of the preceding claims, **characterized in that** it consists in a pressure-cooker.

10. Removable timer (11) serving to be used and removably mounted on an appliance for cooking food under pressure comprising:
1 a bowl and a lid (2) destined to be mounted on the bowl to form a leaktight cooking enclosure,
2 a temperature sensor (10),
3 a pressure-regulating valve (3) that is sensitive to the pressure prevailing inside the cooking enclosure and that is mounted to move between two stable abutment positions, namely a first position in which it shuts off communication from the enclosure to the outside so long as the internal pressure is lower than a predetermined pressure P₀, and a second position in which it puts the inside of the enclosure into communication with the outside via a steam outlet (7) once the internal pressure reaches substantially the predetermined pressure P₀, said temperature sensor (10) being disposed in the vicinity of the outlet (7) so as to make it possible to sense the increase in temperature resulting from the steam passing through the steam outlet (7), and being connected functionally to the removable timer (11) so as to trigger it once the increase en temperature is sensed, said removable timer (11) emitting a warning signal for the purpose of warning the user that it has been triggered so as to allow the user to extract the timer (11).

11. A method of monitoring the cooking cycle of a pressure-cooking appliance, in which method the temperature of the jet of steam discharged by the pressure-regulating valve of the appliance is used to trigger automatically a timer mounted on the appliance emitting a warning signal for warning the user in real time when the operating pressure is reached.

12. A method according to claim 11, **characterized in that** simultaneously to being triggered, the timer emits a warning signal, e.g. a light signal or a sound signal, for warning the user.

13. A method according to claim 10 or 11 **characterized in that**, with the timer being mounted removably on the appliance, the timer is dissociated from the appliance, and then the progress of the cooking is monitored remotely from the appliance by consulting the timer.

14. A method according to claim 13, **characterized in that** the timer emits a warning signal at the end of the cooking cycle.

## Patentansprüche

1. Dampfdruck-Kochgerät mit:
- einem Behälter und einem Deckel (2), der dazu bestimmt ist, auf den Behälter aufgesetzt zu werden, un einen dichten Gareinschluss zu bilden,
- einem Temperatursensor (10),
- einem Druckregelventil (3), das auf den Druck reagiert, der im Inneren des Gareinschlusses herrscht, und das zwischen zwei stabilen Anschlagpositionen beweglich montiert ist, einer ersten, in der es die Kommunikation des Einschlusses mit der Außenseite sperrt, solange der Innendruck niedriger ist als der vorbestimmte Druck P₀, einer zweiten, in der es das Innere des Einschlusses mit der Außenseite über einen Dampfausgang (7) in Kommunikation bringt, sobald der Innendruck im Wesentlichen den vorbestimmten Druck P₀ erreicht,
**dadurch** gekenntzeichnet, dass der Temperatursensor (10) in der Nähe des Ausgangs (7) angeordnet ist, um das Erfassen des Temperaturanstiegs zu erlauben, der sich durch die Passage des Dampfs durch den Dampfausgang (7) ergibt, und funktional mit einem Zeitmesser (11) oder einer Sicherheitsvorrichtung derart verbunden ist, dass sein Auslösen ab dem Erfassen des Temperaturanstiegs sichergestellt ist.

2. Gerät nach Anspruch 1, **dadurch gekennzeichnet, dass** der Zeitmesser (11) und der Temperatursensor (10) auf den Behälter oder auf dem Deckel (2) montiert sind.

3. Gerät nach Anspruch 2, **dadurch gekennzeichnet, dass** der Zeitmesser (11) abnehmbar ist.

4. Gerät nach einem der Ansprüche 1 bis 3, **dadurch gekennzeichnet, dass** der Zeitmesser (11) funktionalmit dem Temperatursensor (10) über elektrische Stecker (20) verbunden ist.

5. Gerät nach einem der Ansprüche 1 bis 4, **dadurch gekennzeichnet, dass** der Dampfausgang (7) aus einer Leitung (13) gebildet wird, die stromabwärts des Ventils (3) beginnt.

6. Gerät nach Anspruch 5, **dadurch gekennzeichnet, dass** die Leitung (13) und der Temperatursensor (10) aus einem Stück gebildet sind.

7. Gerät nach Anspruch 5, **dadurch gekennzeichnet, dass** der Temperatursensor (10) außerhalb der Leitung (13) montiert ist.

8. Gerät nach Anspruch 7, **dadurch gekennzeichnet, dass** der Temperatursensor (10) gegen die Außenfläche der Leitung (13) montiert ist.

9. Gerät nach einem der vorhergehenden Ansprüche, **dadurch gekennzeichnet, dass** es aus einem Schnellkochtopf besteht.

10. Abnehmbarer Zeitmesser (11), der dazu bestimmt ist, verwendet zu werden für und abnehmbar montiert zu werden auf ein Dampfdruck-Kochgerät für Nahrungsmittel, umfassend:
1 einen Behälter und einen Deckel (2), der dazu bestimmt ist, auf den Behälter aufgesetzt zu werden, um einen dichten Gareinschluss zu bilden,
2 einen Temperatursensor (10),
3 ein Druckregelventil (3), das auf den Druck reagiert, der in dem Gareinschluss herrscht und das zwischen zwei stabilen Anschlagpositionen beweglich montiert ist, einer ersten, in der es die Kommunikation des Einschlusses mit der Außenweite solange sperrt, solange der Innendruck niedriger ist als der vorbestimmte Druck P₀, einer zweiten, in der es das Innere des Einschlusses mit der Außenseite über einen Dampfausgang (7) in Kommunikation bringt, sobald der Innendruck im Wesentlichen den vorbestimmten Druck P₀ erreicht, wobei der Temperatursensor (10) in der Nähe des Ausgangs (7) angeordnet ist, um das Erfassen des Temperaturanstiegs zu erlauben, der sich aus der Passage des Dampfs durch den Dampfausgang (7) ergibt, und funktional mit dem abnehmbaren Zeitmesser (11) derart verbunden, dass dessen Auslösen sichergestellt wird, sobald der Temperaturanstieg erfasst wird, wobei der abnehmbare Zeitmesser (11) ein Warnsignal abgibt, um den Benutzer über sein Auslösen zu informieren und es dem Benutzter zu erlauben, den Zeitmesser (11) abzunehmen.

11. Verfahren zum Steuern des Garzyklus eines Dampfdruck-Kochgeräts, bei dem man die Temperatur des Dampfstroms verwendet, der aus dem Druckregelventil des Geräts austritt, um das automatische Auslösen eines Zeitmessers, der auf das Gerät montiert ist, sicherzustellen, das ein Warnsignal abgibt, um den Benutzer in Echtzeit über das Erreichen des Betriebsdrucks zu einformieren.

12. Verfahren nach Anspruch 11, **dadurch gekennzeichnet, dass** gleichzeitig mit dem Auslösen des Zeitmessers oder der Sicherheitsvorrichtung dieser/diese Letztere ein Warnsignal abgibt, zum Beispiel ein Lichtsignal oder akustisches Signal, um den Benutzer zu warnen.

13. Verfahren nach Anspruch 10 oder 11, **dadurch gekennzeichnet, dass** man, da der Zeitmesser abnehmbar auf das Gerät montiert ist, der Zeitmesser von dem Gerät entfernt und dann in einem Abstand die Entwicklung des Garens durch Ablesen des Zeitmessers überwacht.

14. Verfahren nach Anspruch 13, **dadurch gekennzeichnet, dass** der Zeitmesser am Ende des Garzyklus ein Warnsignal abgibt.
